# EUROPEAN PATENT APPLICATION

(11) **EP 1 864 788 A2**
(43) Date of publication of application: **12.12.2007**
(21) Application number: 07252281.6
(22) Date of filing: 06.06.2007
(51) Int. Cl.: B29D 31/00

(54) **Apparatus and method for manufacturing a glove containing electro-magnetically detectable particles**

(30) Priority: 07.06.2006 GB 0611288
(71) Applicant: Connor, Dennis Frederick, Bexhill-on-Sea TN39 3AR (GB)
(72) Inventor: Connor, Dennis Frederick, Bexhill-on-Sea TN39 3AR (GB)
(74) Representative: Evans, Claire

(57) **Abstract**

An apparatus and method for manufacturing a glove which contains electro-magnetically detectable particles, the apparatus comprising a dip tank (1) and a mixer (3) for mixing a liquid in said dip tank.

## Description

The invention relates to an apparatus and method for manufacturing a glove containing electro-magnetically detectable particles.

The wearing of gloves by operatives in manufacturing industries, such as the pharmaceutical, food and tobacco industries, is important to protect products from contamination and to preserve the required high standards of hygiene and cleanliness. However, a glove may be snagged or torn with the result that a piece of glove may become detached and mixed with the products being manufactured.

To meet this problem, it is known to colour operatives' gloves blue so that gloves can be detected visually. Visual detection is not foolproof, however, particularly where small glove pieces are concerned, and so it is also known to include electro-magnetically detectable particles in operatives' gloves so that pieces of the glove can be detected electro-magnetically if they become mixed with products during the manufacturing process.

Gloves containing electro-magnetically detectable particles are currently manufactured by dipping shaped formers in a dip tank containing a solution of a polymeric material containing electro-magnetically detectable particles. The dip tank is a conventional dip tank used for manufacturing gloves which do not contain electro-magnetically detectable particles.

A problem with this known method is that the electro-magnetically detectable particles tend to sink to the bottom of the dip tank with a result that it is difficult to obtain a glove containing evenly dispersed electro-magnetically detectable particles. Having evenly dispersed electro-magnetically detectable particles is important as it allows even small pieces of a glove to be detected using conventional detection equipment. Another problem with the known method is that mixing the electro-magnetically detectable particles with the solution of polymeric material creates minute bubbles, which burst during drying of the gloves, and result in holes in the gloves. It is known to eliminate these holes using multiple dipping, but this thickens the gloves, thereby reducing the freedom of movement and dexterity of an operative wearing the gloves.

It is an object of the invention to seek to mitigate the above problems.

According to a first aspect, the invention provides an apparatus for manufacturing a glove which contains electro-magnetically detectable particles, the apparatus comprising a dip tank and a mixer for mixing a liquid in said dip tank.

Using a mixer to mix the liquid in a dip tank prevents the electro-magnetically detectable particles from sinking to the bottom of the dip tank, and therefore results in gloves containing more evenly dispersed electro-magnetically detectable particles. Any suitable mixer may be used.

The mixer may be positioned in a mixing chamber which is connected to the dip tank. This results in better regulation of the flow of the liquid in the dip tank, and also ensures that the mixer does not obstruct the dipping of formers into the dip tank.

The mixing chamber may comprise an inlet for receiving a liquid from the dip tank and an outlet for returning said liquid to the dip tank.

The inlet may be positioned above the outlet.

The mixing tank may contain a baffle. If liquid flows over the top of such a baffle, some or all of the bubbles in the liquid will be dispersed. By this means, the number of holes in the formed glove may be reduced to such an extent that multiple dipping is no longer necessary, with the result that gloves made using the apparatus according to the invention may be much thinner than known gloves.

The height of the baffle may be adjustable. The top of the baffle should be below the level of the liquid in the dip tank, otherwise the baffle will result in a "waterfall" which will increase the number of bubbles in the liquid, rather than decreasing the number of bubbles. If the height of the baffle is adjustable, this means that the dip tank can be altered to accommodate any liquid level. It also means that the flow of liquid through the dip tank may be regulated.

The baffle may be positioned at the inlet to the mixing chamber.

Alternatively, or in addition, the dip tank may contain a baffle.

The baffle in the dip tank may be positioned so that the liquid returning to the dip tank flows over the baffle.

The baffle may form a conduit to direct a liquid returning to the dip tank to the upper region of the dip tank. The term "upper region" as used herein means that portion of the dip tank which is closest to the surface of a liquid contained in the dip tank.

The dip tank may contain one or more flow diverters on the bottom of the tank which may direct a liquid in the tank towards the upper region of the tank.

The liquid in the dip tank will usually be a solution of a polymeric material containing electro-magnetically detectable particles. Any suitable polymeric material and electro-magnetically detectable particles may be used. The polymeric material may be a plastisol such as a natural latex, acrylobutadiene (nitrite) or polyvinylchloride (pvc). The electro-magnetically detectable material may comprise ferrous oxide.

According to a second aspect, the invention provides an apparatus for manufacturing a glove which contains electro-magnetically detectable particles, the apparatus comprising a dip tank and a baffle.

The apparatus may further comprise a mixer for mixing a liquid in said dip tank.

According to a third aspect, the invention provides a method of manufacturing a glove containing electro-magnetically detectable particles, the method comprising the steps of:
a. placing a solution of a polymeric material containing electro-magnetically detectable particles in a dip tank;
b. mixing said solution with a mixer; and
c. dipping a former in said solution to form a glove.

The solution may be caused to flow over a baffle to disperse some or all of the bubbles in the solution.

The particles in said solution may have a particle size of 0.1 microns or less, preferably 0.05 microns or less, more preferably 0.01 microns or less. As mentioned above, passing the solution over a baffle allows the thickness of the gloves to be reduced as it reduces the number of holes in the gloves, thereby removing the need for multiple dipping. Using a small particle size also allows the thickness of the gloves to be reduced.

The electro-magnetically detectable particles may be ferrous oxide particles, preferably Fe₃O₄ particles. Ferrous oxide provides good detection qualities even when a small particle size is used.

Using the method according to the invention, it is possible to provide the gloves having a thickness in the range 70-100 microns.

According to a fourth aspect, the invention provides a method of manufacturing a glove containing electro-magnetically detectable particles, the method comprising the steps of:
a. placing a solution of a polymeric material containing electro-magnetically detectable particles in a dip tank;
b. flowing the solution over a baffle to disperse some or all of the bubbles in the solution; and
c. dipping a former in said solution to form a glove.

The solution may be mixed with a mixer before said former is dipped in said solution.

According to a fifth aspect, the invention provides a glove made by a method according to the invention.

The invention will now be illustrated by way example with reference to the following drawings of which:
Figure 1 shows a cross-sectional side view of part of a first embodiment of an apparatus according to the invention;
Figure 2 shows a cross-sectional side view of the mixing chamber shown in Figure 1;
Figure 3 shows a perspective view of the mixing chamber shown in Figure 1; and
Figure 4 shows a cross-sectional end view of a second embodiment of an apparatus according to the invention.

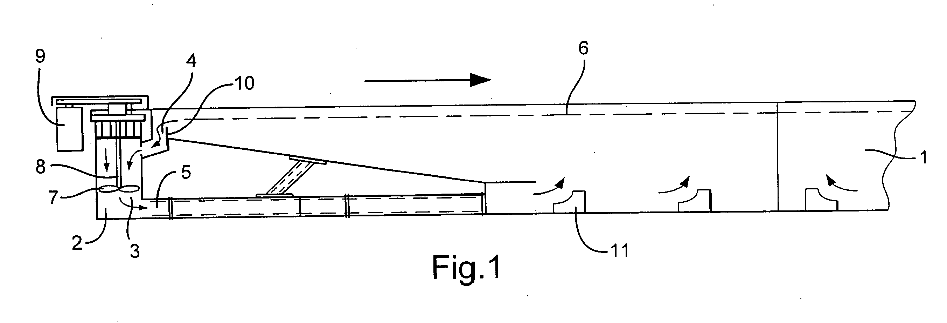

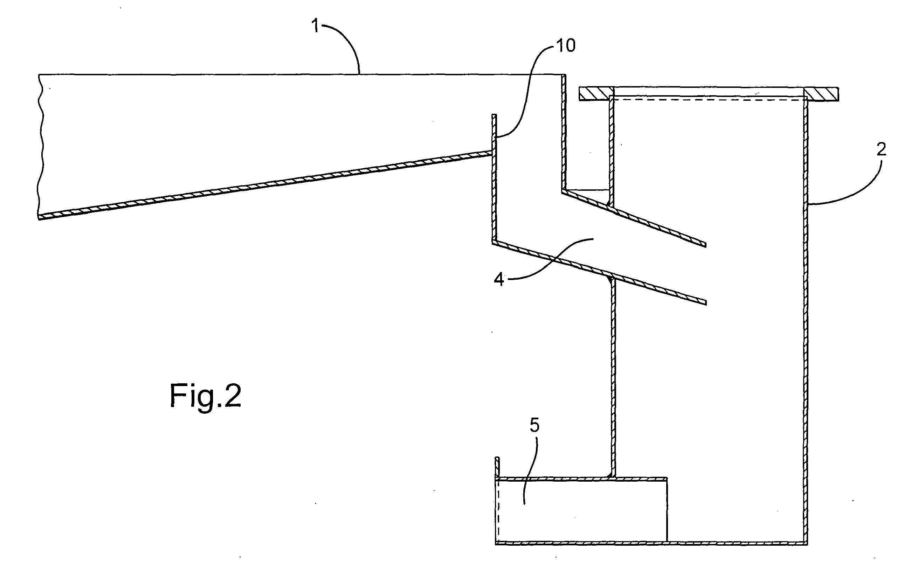

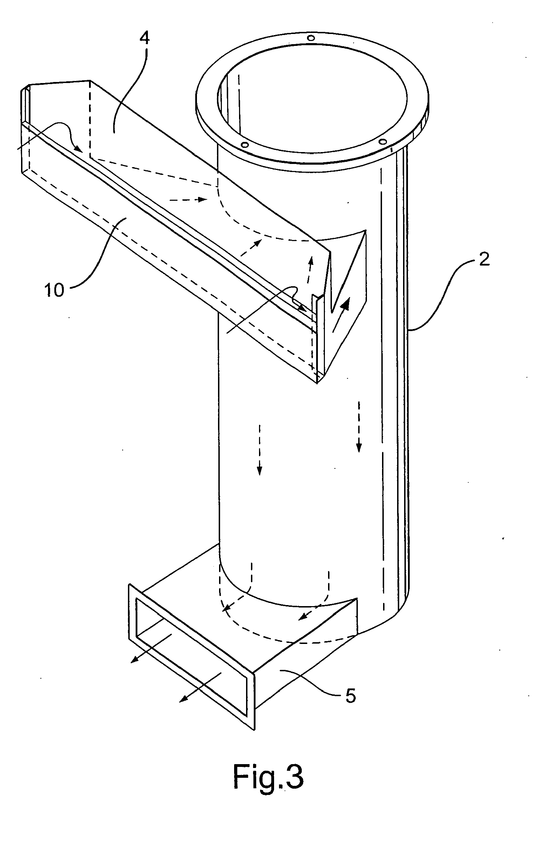

The apparatus shown in Figures 1 to 3 comprises a dip tank 1 connected at each end to a mixing chamber 2 containing a mixer 3. Only one of the mixing chambers 2 is shown in the drawings. The dip tank 1 may be a conventional dip tank which has been adapted into an apparatus according the invention.

The mixing chamber 2 is cylindrical in shape and comprises an inlet 4 for receiving a liquid from the dip tank 1 and an outlet 5 for returning said liquid to the dip tank 1.

The inlet 4 leaves the dip tank 1 towards the upper region thereof, just below the liquid level 6, and slopes downwardly so that it enters the mixing chamber 2 at a lower position. The outlet 5 exits the mixing chamber 2 at the bottom thereof, and is horizontally disposed so that it enters the dip tank 1 at the same level.

The mixer 3 comprises a propeller 7 connected to a drive-shaft 8. The drive-shaft 8 is driven by a motor 9 mounted on the side of the mixing chamber 2.

A baffle plate 10 is positioned at the entrance to the inlet 4. The height of the baffle plate 10 is adjustable. It is usually set 40 to 60 mm below the liquid level 6.

A number of flow diverters 11 are positioned on the bottom of the dip tank 1 to direct the liquid towards the upper region of the dip tank 1.

In use, the dip tank 1 is filled with a solution of a polymeric material (for example, nitrite rubber neoprene) containing electro-magnetically detectable particles (for example, ferrous oxide). Typically, the solution contains 6-9% by volume of the particles and the particles have a particle size less than 0.01 microns.

The propeller 7 on the mixer 3 at either end of the dip tank 1 rotates, thereby circulating the liquid in the dip tank 1. This helps to prevent the electro-magnetically detectable particles from sinking to the bottom of the dip tank 1. The flow diverters 11 also help to prevent this as they direct the liquid towards the upper region of the dip tank 1.

Before entering the mixing chamber 2, the liquid flows over the baffle plate 10, thereby dispersing some or all of the bubbles in the liquid, and reducing the number of holes in the formed gloves.

The formers (not shown) move in the direction of the arrow, and are dipped into the solution once to form the gloves. The gloves have a thickness in the range 70 to 100 microns, and contain evenly dispersed electro-magnetic particles.

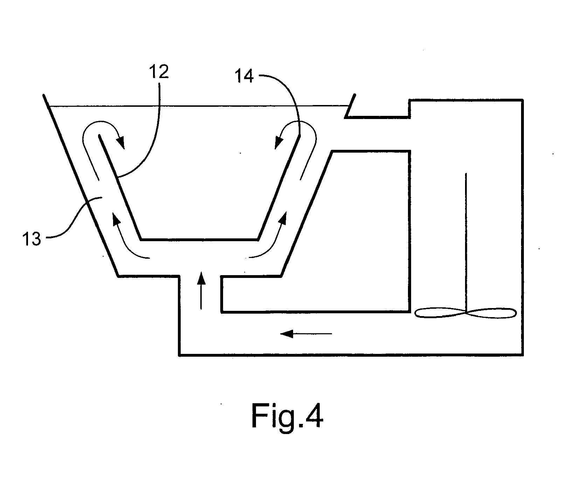

The apparatus shown in Figure 4 is similar to that shown in Figures 1 to 3, but it includes a baffle 12 in the dip tank 1. The baffle 12 corresponds in shape to the dip tank 1 and forms a conduit 13 to direct a liquid returning to the dip tank 1 to the upper region of the dip tank 1.

In use, the liquid flows over the lip 14 of the baffle 12 before returning to the main body of the dip tank 1, thereby dispersing some or all of the bubbles in the liquid.

## Claims

1. An apparatus for manufacturing a glove which contains electro-magnetically detectable particles, the apparatus comprising a dip tank and a mixer for mixing a liquid in said dip tank.

2. Apparatus according to claim 1, the mixer being positioned in a mixing chamber which is connected to the dip tank.

3. Apparatus according to claim 2, wherein the mixing chamber comprises an inlet for receiving a liquid from the dip tank and an outlet for returning said liquid to the dip tank.

4. Apparatus according to claim 3, wherein the inlet is positioned above the outlet.

5. Apparatus according to any of claims 2 to 4, wherein the mixing tank contains a baffle.

6. Apparatus according to claim 5, wherein the height of the baffle is adjustable.

7. Apparatus according to claim 5 or claim 6, wherein the baffle is positioned at the inlet to the mixing chamber.

8. Apparatus according to any preceding claim, wherein the dip tank contains a baffle.

9. Apparatus according to claim 8, wherein the baffle is positioned so that a liquid returning to the dip tank flows over the baffle.

10. Apparatus according to claim 9, wherein the baffle forms a conduit to direct a liquid returning to the dip tank to the upper region of the dip tank.

11. Apparatus according to any preceding claim, wherein the dip tank contains one or more flow diverters on the bottom of the tank.

12. Apparatus according to claim 11, wherein the flow diverters direct a liquid in the tank towards the upper region of the dip tank.

13. An apparatus for manufacturing a glove which contains electro-magnetically detectable particles, the apparatus comprising a dip tank and a baffle.

14. A method of manufacturing a glove containing electro-magnetically detectable particles, the method comprising the steps of;
a. placing a solution of a polymeric material containing electro-magnetically detectable particles in a dip tank,
b. mixing said solution with a mixer, and
c. dipping a former in said solution to form a glove.

15. A method according to claim 14, wherein the solution is caused to flow over a baffle to disperse some or all of the bubbles in the solution.

16. A method according to claim 14 or claim 15, wherein the particles in said solution have a particle size of 0.1 microns or less, preferably 0.05 microns or less, more preferably 0.01 microns or less.

17. A method according to any of claims 14 to 16, wherein the glove has a thickness of in the range 70 to 100 microns.

18. A method of manufacturing a glove containing electro-magnetically detectable particles, the method comprising the steps of;
a. placing a solution of a polymeric material containing electro-magnetically detectable particles in a dip tank,
b. flowing the solution over a baffle to disperse some or all of the bubbles in the solution, and
c. dipping a former in said solution to form a glove.

19. A glove made by a method according to any of claims 14 to 18.
